# EUROPÄISCHE PATENTSCHRIFT

(11) **EP 0 496 955 B1**
(45) Veröffentlichungstag und Bekanntmachung des Hinweises auf die Patenterteilung: **08.06.1994**
(21) Anmeldenummer: 91118284.8
(22) Anmeldetag: 26.10.1991
(51) Int. Cl.: H01S 3/034, G02F 2/02

(54) **Bei Umgebungsdruck betriebener, gepulster Gaslaser, Gaslaserverstärker oder Wellenlängenkonverter**
Pulsed gas laser, gas laser amplifier or wavelength converter operated at ambient pressure
Laser à gaz impulsionel, amplificateur laser à gaz ou convertisseur de longeur d'ondes travaillant à la pression du milieu ambiant

(30) Priorität: 30.01.1991 DE 4102683
(43) Veröffentlichungstag der Anmeldung: 05.08.1992
(73) Patentinhaber: URANIT GmbH, D-52409 Jülich (DE)
(72) Erfinder: Freyaldenhoven, Udo, W-5163 Heistern (DE)
(74) Vertreter: Gottlob, Peter, Dipl.-Ing.

(56) Entgegenhaltungen:
- EP-A- 0 277 338
- US-A- 3 936 771
- IEEE JOURNAL OF QUANTUM ELECTRONICS Bd. QE-5, Nr. 12, Dezember 1969, Seiten 575 - 586; W.F.KRUPKE ET AL.: 'PROPERTIES OF AN UNSTABLE CONFOCAL RESONAROR CO2 LASER SYSTEM'

## Beschreibung

Die Erfindung betrifft einen bei Umgebungsdruck betriebenen, gepulsten Gaslaser, Gaslaserverstärker oder mit Gas gefüllten Wellenlängenkonverter-Laser, an den eine Lasergasversorgung angeschlossen ist und der mit einem rohrförmigen, offen in die Umgebung ausmündenden Fenster zum Ein- und Auskoppeln eines Laserstrahles ausgestattet ist.

Aus der Zeitschrift AIAA Journal, Vol. 17, No. 11, September 1979, Seite 1267, ist es bekannt, Hochleistungslaser, die bei athmosphärischem Druck betrieben werden, mit einem sogenannten "Free-Vortex Aerodynamic Window" zum Auskoppeln des Laserstrahls auszustatten. Der konstruktive Aufbau derartiger Fenster ist z.B. aus der US-PS 3,936,771 oder der DE 37 01 718 C2 zu ersehen. Es handelt sich um eine Art Gasvorhang, der an der Mündung des Fensters das Lasergas von der Umgebung trennt.

Aus der Zeitschrift Laser und Optoelektronik 21 (4), 1989, Seiten 67 bis 71, ist für CO₂-Hochleistungslaser, in deren Entladungs- bzw. Resonatorraum ein Druck von typischerweise 100 mbar herrscht, ein aerodynamisches Fenster mit axialer Gasströmung bekannt (s. Seite 67). Bei diesem Fenster, das nach dem Prinzip einer Strahlpumpe arbeitet, muß ein unvermeidlicher Verlust an Lasergas fortwährend ausgeglichen werden. Sowohl dieses Fenster als auch die zuerst beschriebene Bauart machen leistungsstarke Pump- bzw. Kompressorsysteme mit dem hiermit verbundenen Aufwand erforderlich.

Die Erfindung hat zur Aufgabe, bei einem gattungsgemäßen Laser durch einfache, konstruktive Maßnahmen den apparativen und betriebsmäßigen Aufwand für die Trennung von Lasergas und Umgebungsgas am Fenster zu reduzieren.

Diese Aufgabe wird mit den kennzeichnenden Merkmalen des Patentanspruchs 1 gelöst. Der hierauf bezogene Unteranspruch 2 beinhaltet eine vorteilhafte Optimierungsmaßnahme dieser Lösung.

Die Erfindung macht sich den Umstand zu nutze, daß in einem senkrecht angeordneten, langgestreckten Rohr bereits bei sehr geringer Strömungsgeschwindigkeit des Lasergases die unterschiedlichen Auftriebskräfte von Lasergas und Umgebungsgas, normalerweise Luft, ausreichen, um das Lasergas und das Umgebungsgas voneinander getrennt zu halten. Da bei den gattungsgemäßen Lasern in vielen Fällen während des Betriebs ohnehin das Lasergas mit einer gewissen Austauschrate gewechselt werden muß, ist es vorteilhaft, die Dosierung des Lasergases aus der Gasversorgung und das Volumen des Fensters so aufeinander abzustimmen, daß der Gasverbrauch etwa dieser Austauschrate entspricht oder nicht wesentlich darüber liegt.

Die Erfindung wird im folgenden anhand einer schematischen Skizze erläutert:

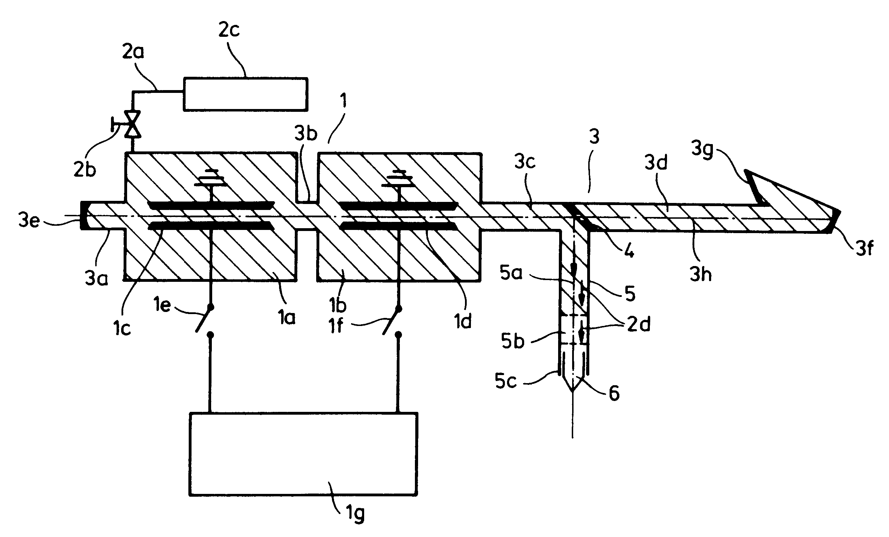

Die Figur zeigt einen gepulsten CO₂-TEA-Laser 1, 3 mit einem zwei Modulatoren 1a, 1b aufweisenden Oszillator 1. Die Modulatoren 1a, 1b sind mit Elektroden 1c, 1d ausgestattet, die über Schalter 1e, 1f an eine Hochspannungsversorgung 1g angeschlossen sind.

Der Modul 1a ist über eine Leitung 2a und ein Dosierventil 2b mit einer Lasergasversorgung 2c verbunden. Die Laserkavität 3 wird von einem horizontalen, rohrförmigen, die Module 1a, 1b durchsetzenden Gebilde 3a, 3b, 3c, 3d verkörpert, das an seinem einen Ende 3a von einem Cu-Spiegel 3e und an seinem anderen Ende 3d von einem Cu-Spiegel 3f und einem hierzu im Winkel angeordneten Gitter 3g begrenzt wird. Zwischen den Rohrabschnitten 3c und 3d ist ein Cu-Auskoppler 4 angeordnet, der eine zentrale Öffnung aufweist und gegenüber der Rohrachse 3h um einen Winkel von 45° geneigt ist. Dem Cu-Auskoppler 4 ist ein an den Rohrabschnitt 3c angeschlossenes, rohrförmiges Fenster 5 zugeordnet. Dieses Fenster 5 weist mit seiner Längsachse 5a senkrecht nach unten und mündet offen in die die Apparatur umgebende Atmosphäre aus. Der Durchmesser des Fensters 5 ist etwas größer als der Durchmesser des auszukoppelnden Laserstrahls 6.

Beim Pulsbetrieb des Lasers ändert sich das Volumen des Lasergases periodisch in der Weise, daß es sich bei einem Puls kurzfristig ausdehnt und danach wieder zusammenzieht. Die Größe dieser periodischen Volumenänderung hängt von der Intensität der Pulse ab. Das Volumen des Fensters 5, bzw. bei vorgegebenem Durchmesser dessen Länge, ist nun so bemessen, daß es einem Mehrfachen dieser durch den Pulsbetrieb des Lasers bedingten, periodischen Änderung des Volumens des Lasergases entspricht. Beträgt die maximale Ausdehnung des Volumens des Lasergases z. B. 0,2 1, so wird das Fenster im vorliegenden Beispiel auf eine Länge von 30 cm ausgelegt bei einem Durchmesser von 5 cm. In dem Fenster 5 bildet sich beim Pulsbetrieb eine Mischzone 5b aus, deren Volumen am unteren Ende des Fensters etwas größer als 0,2 1 ist. Da das Lasergas leichter ist als die umgebende Luft, ist die Auftriebskraft des Lasergases in der Mischzone 5b nach oben gerichtet, während die Auftriebskraft der Luft in der Mischzone 5b nach unten zur Mündung 5c des Fensters 5 gerichtet ist. Ist die umgebende Atmosphäre, z.B. Helium, leichter als das Lasergas, so liegen die Verhältnisse umgekehrt; in diesem Falle ragt das Fenster mit seiner Mündung senkrecht nach oben.

Um der Diffusion der Luft aus der Mischzone 5b in die Laserkavität 3 bzw. in den Oszillator 1 entgegenzuwirken, läßt man durch das Fenster 5 permanent eine gewisse Lasergasmenge 2d nach unten abströmen. Diese der Gasversorgung 2c entnommene Menge wird über das Dosierventil 2b so eingeregelt, daß die Konzentration des eindiffundierenden Umgebungsgases, also der Luft, in dem Laservolumen 1, 3 einen Vorgegebenen Grenzwert nicht überschreitet. Unterhalb dieses Grenzwertes wird die Funktion des Lasers nicht mehr beeinträchtigt.

Die Erfindung läßt sich in entsprechender Weise auch bei Gaslaserverstärkern oder mit Gas gefüllten Wellenlängenkonvertern realisieren. In jedem Falle entfallen die ansonsten für derartige Gasfenster erforderlichen Pumpen bzw. Kompressoren und der damit verbundene Aufwand, sowie der Einsatz von etwaigen Fremdgasen.

### Bezugszeichenliste

- 1: Oszillator
- 1a: Modul
- 1b: Modul
- 1c: Elektrode
- 1d: Elektrode
- 1e: Schalter
- 1f: Schalter
- 1g: Hochspannungsversorgung
- 2a: Leitung
- 2b: Dosierventil
- 2c: Lasergasversorgung
- 2d: Lasergasmenge
- 3: Laserkavität
- 3a: ein Ende der Laserkavität
- 3b: Rohrabschnitt
- 3c: Rohrabschnitt
- 3d: anderes Ende der Laserkavität
- 3e: Cu-Spiegel
- 3f: Cu-Spiegel
- 3g: Gitter
- 3h: Rohrachse
- 4: Cu-Auskoppler
- 5: Fenster
- 5a: Längsachse
- 5b: Mischzone
- 5c: Mündung
- 6: Laserstrahl

## Patentansprüche

1. Bei Umgebungsdruck betriebener, gepulster Gaslaser (1,3), Gaslaserverstärker oder mit Gas gefüllter Wellenlängenkonverter-Laser, an den eine Lasergasversorgung (2c) angeschlossen ist und der mit einem rohrförmigen, offen in die Umgebung ausmündenden Fenster (5) zum Ein- oder Auskoppeln eines Laserstrahls (6) ausgestattet ist, gekennzeichnet durch folgende Merkmale:
a) das rohrförmige Fenster (5) hat ein Volumen, das einem Mehrfachen der Änderung des Volumens das Lasergases beim Pulsbetrieb des Lasers (1, 3) entspricht;
b) das rohrförmige Fenster (5) ist bezüglich seiner Längsachse (5a) senkrecht oder annähernd senkrecht an dem Laser (1, 3) angebracht und weist mit seiner Mündung (5c) in dieselbe Richtung wie die Auftriebskraft des Umgebungsgases in der Mischzone (5b) des Fensters (5), die sich beim Pulsbetrieb des Lasers (1, 3) ausbildet;
c) die aus der Lasergasversorgung (2c) dem Laser (1, 3) zugeführte und durch das rohrförmige Fenster (5) abströmende Lasergasmenge (2d) ist so bemessen, daß die Konzentration des in den Laser (1, 3) eindiffundierenden Umgebungsgases unterhalb eines vorgegebenen Grenzwertes liegt.

2. Gaslaser nach Anspruch 1, dadurch gekennzeichnet, daß die Dosierung (2b) des Lasergases aus der Gasversorgung (2c) und das Volumen des Fensters (5) so aufeinander abgestimmt sind, daß die durch das Fenster (5) abströmende Lasergasmenge (2d) der erforderlichen Austauschrate an Lasergas für den Betrieb des Gaslasers (1, 3) entspricht oder etwas darüber liegt.

## Revendications

1. Laser à gaz pulsé (1, 3) fonctionnant à pression ambiante, amplificateur laser à gaz ou convertisseur de longueur d'onde laser rempli de gaz sur lequel une alimentation de gaz laser (2c) est branchée et qui est muni d'une fenêtre (5) tubulaire débouchant librement sur l'environnement pour enclencher ou déclencher un rayon laser (6) caractérisé par les caractéristiques suivantes:
a) la fenêtre tubulaire (5) a un volume qui représente un multiple de la variation du volume du gaz laser lors du régime pulsatoire du laser (1, 3) ;
b) la fenêtre tubulaire (5) est par son axe longitudinal (5a) perpendiculaire ou presque perpendiculaire au laser (1, 3) et dirige son débouché (5c) dans le même sens que la force ascensionnelle du gaz environnant dans la zone de mélange (5b) de la fenêtre (5), qui se forme lors du régime pulsatoire du laser (1, 3) ;
c) la quantité de gaz laser (2d) provenant de la réserve de gaz laser (2c) est introduite dans le laser (1, 3) et sortant par la fenêtre tubulaire (5) est déterminée de sorte que la concentration du gaz environnant diffusant dans le laser (1, 3) reste en dessous d'une valeur limite prédéterminée.

2. Laser à gaz selon la revendication 1, caractérisé en ce que le débit (2b) du gaz laser provenant de la réserve de gaz (20) et le volume de la fenêtre (5) sont adaptés l'un à l'autre, de sorte que la quantité de gaz laser (2d) s'écoulant par la fenêtre (5) correspond ou est légèrement supérieure au taux de renouvellement en gaz laser nécessaire un fonctionnement du laser à gaz (1, 3).

## Claims

1. Pulsed gas laser (1, 3), gas laser amplifier or gas-filled wavelength converter laser which is driven at ambient pressure, a laser gas supply (2c) communicating with said laser which is provided with a tubular window (5) opening out into the ambient surroundings for the connection or disconnection of a laser beam (6), characterised by the following features:
a) the tubular window (5) has a volume which corresponds to a multiple of the change in volume of the laser gas during the pulse drive of the laser (1, 3);
b) the tubular window (5) is mounted on the laser (1, 3) perpendicularly or approximately perpendicularly relative to its longitudinal axis (5a) and points with its aperture (5c) in the same direction as the upward force of the ambient gas in the mixing zone (5b) of the window (5), which force is formed during the pulse drive of the laser (1, 3);
c) the laser gas quantity (2d), which is supplied to the laser (1, 3) from the laser gas supply (2c) and flows-away through the tubular window (5), is so dimensioned that the concentration of the ambient gas, which diffuses into the laser (1, 3), lies below a prescribed limit value.

2. Gas laser according to claim 1, characterised in that the dosaging means (2b) for the laser gas from the gas supply (2c) and the volume of the window (5) are so adapted to each other that the laser gas quantity (2d), which flows-away through the window (5), corresponds to the required exchange rate of laser gas for the operation of the gas laser (1, 3) or lies somewhat thereabove.
